# EUROPEAN PATENT SPECIFICATION

(11) **EP 4 518 054 B1**
(45) Date of publication and mention of the grant of the patent: **28.01.2026**
(21) Application number: 23194945.4
(22) Date of filing: 01.09.2023
(51) Int. Cl.: H02B 1/21

(54) **MOUNTING PORTION WITH A SECURING MECHANISM, ADAPTER FOR AN ELECTRICAL INSTALLATION DEVICE, AND ELECTRICAL INSTALLATION DEVICE**
BEFESTIGUNGSTEIL MIT EINER SICHERUNGSEINRICHTUNG, ADAPTER FÜR EIN ELEKTRISCHES INSTALLATIONSGERÄT UND ELEKTRISCHES INSTALLATIONSGERÄT
PARTIE DE MONTAGE DOTÉE D'UN MÉCANISME DE FIXATION, ADAPTATEUR POUR UN DISPOSITIF D'INSTALLATION ÉLECTRIQUE ET DISPOSITIF D'INSTALLATION ÉLECTRIQUE

(43) Date of publication of application: 05.03.2025
(73) Proprietor: Wöhner Besitz GmbH, 96472 Rödental (DE)
(72) Inventor: MÜTZEL, David, 96450 Coburg (DE); SCHWARZ, Jonas, 96450 Coburg (DE)
(74) Representative: 2s-ip Schramm Schneider Bertagnoll Patent- und Rechtsanwälte Part mbB

(56) References cited:
- EP-B1- 0 634 768
- EP-B1- 1 764 872
- DE-B4- 10 061 939
- DE-U1- 29 708 690
- DE-U1- 29 806 196

## Description

The present invention relates to a mounting portion with a securing mechanism, to an adapter for an electrical installation device, as well as to an electrical installation device or component having such a mounting portion.

Mounting portions or adapters are used in electrical installations for attaching electrical installation devices to a current busbar system. The current busbar system comprises one or several busbars, and optionally a touch protection device covering the busbars of the busbar system. Usually, the current busbar system along with the installation devices mounted thereon is enclosed in a switch cabinet.

Known mounting portions and adapters are equipped with fastening means like hooks, clamps with which the mounting portions or adapters are attached onto the busbars. In such a way, they couple the installation device mechanically and electrically with the busbar system.

Additionally to the fastening means, the mounting portion, adapter or installation device may be provided with a securing mechanism which protects the mounting portion or adapter against unintentional separation from the busbar system. Such a securing mechanisms may comprise an arm which is articulated on the mounting portion and grasps the busbar system, or the touch protection device if present. It should produce an additional, self-reinforcing clamping force when the mounting portion is tried to be lifted up. But lifting up leads only to such a self-reinforcing clamping force if this would lead to a rotational movement of the mounting portion around a pivot point which is located behind the front surface of the busbar or the cover where the arm is attached to. Then, the arm is additionally pressed against the busbar system rather than being released from the busbar, and the mounting portion or adapter is additionally secured against lifting up.

DE 100 61 939 B4, EP 1 764 872 B1, DE 297 08 690 U1, EP 0 634 768 B1, and DE 298 06 196 U1 relate to mounting portions with features of the preamble of claim 1.

However, in some cases it is impossible or undesirable to get the pivot point of the latching arm placed behind the front surface of the busbar or cover, respectively, e.g., because that space is used or should be kept free for other elements.

Therefore, there is a need to provide a mounting portion, adapter, and installation device with a securing mechanism which alleviate this drawback.

This object is solved by the mounting device with the features of claim 1. Advantageous embodiments thereof are defined in the dependent claims.

Accordingly provided is a mounting portion of an electrical installation device, the mounting portion being attachable to at least one current busbar, the mounting portion comprising:
a hooking mechanism that is arranged on the mounting portion, and is adapted for being hooked onto the at least one busbar,
a securing mechanism, comprising:
   a latching arm, the latching arm being arranged on the mounting portion, the latching arm being adapted to grasp an attachment point which attachment point is fixed with respect to the at least one busbar,
   the latching arm being further adapted to be in engagement with the attachment point, when the mounting portion is attached to the at least one busbar,
   the latching arm comprising an arm portion which defines a concave arc with a predefined radius, the arm portion being adapted to sit slingly on a section of the mounting portion which defines a convex arc, the convex arc having the predefined radius, and the center point of both arcs being located behind the attachment point when the mounting portion is attached to the at least one busbar.

Advantageous embodiments may comprise the following features. The center point may be located above the uppermost busbar of the at least one busbar, when the mounting portion is attached to the at least one busbar.

The latching arm may be adapted to be permanently pressed to the attachment point in an upward direction.

The attachment point may be located below a top edge of the uppermost busbar of the least one busbar, when the mounting portion is attached to the at least one busbar.

The latching arm may have a sawtooth profile which is adapted to grasp the attachment point.

The attachment point may be a lower front edge of one of the at least one busbar, in particular of the uppermost busbar, when the mounting portion is attached to the at least one busbar.

As an alternative, the attachment point may be located at a touch protection cover which is mounted in front of the at least one busbar.

The securing mechanism may further comprise a spring means for effecting a clamping force, the clamping force being adapted for acting on the latching arm to permanently press the latching arm against the attachment point when the mounting portion is attached to the at least one busbar.

The section may be formed by a rib.

As an alternative, the section may be formed by a number of ribs being spaced apart from each other.

The mounting portion may further comprise a segment which is adapted to support the arm portion, when the mounting portion is attached to the at least one busbar, the segment defining the same concave arc as the arm portion.

The securing mechanism may comprise a releasing mechanism, the releasing mechanism being adapted to be operated for releasing the locking arm from the attachment point.

The invention further provides an adapter comprising the mounting portion with the features as defined above, and being designed to receive an electrical installation device on the mounting portion, and to electrically connect the electrical installation device with a busbar system.

Still further, the invention provides an installation device or an electrical component with a mounting portion as defined above.

The electrical installation device or electrical component may be one of the following: Engine control unit, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller.

The invention and embodiments thereof are further described in connection with the drawing, wherein
- Fig. 1: illustrates a busbar adapter with a mounting portion attached to busbars;
- Fig. 2: illustrates a mounting portion having a conventional securing mechanism;
- Fig. 3: illustrates sectional view of the mounting portion according to a first embodiment of the invention;
- Fig. 4: shows a front view of the adapter with mounting portion according to Fig. 3;
- Fig. 5: illustrates a detail of the securing mechanism according to an embodiment of the invention;
- Fig. 6: illustrates the releasing operation of the securing mechanism,
- Fig. 7: illustrates a detail of a second embodiment of invention, and
- Fig. 8: illustrates the layout of a current conductor of the mounting portion.

In the following, as well as in the claims, "up", "down", "horizontal, "vertical", "in front", "behind", "above", "below", or the like relate to orientations or positions of a part as perceived by a human standing in front of the part, in particular the mounting portion, when it is mounted or placed as intended.

It is assumed that busbars run in the horizontal direction and parallel to each other, and are mounted, or are intended to be mounted, at a vertical wall or surface of a switch cabinet. This horizontal direction is denoted as the y-direction. Several busbars, making up a busbar system, run in parallel to each other.

The mounting portion, busbar adapter or installation device may cover all the busbars of the busbar system, and connect to them. It may extend in the vertical direction, which is denoted as the x-direction, or the longitudinal direction of the busbar adapter or part thereof.

The front or frontside of the mounting portion, busbar adapter, of the installation device, of the busbars, the busbar system or of any part thereof is the side which is oriented to a human standing in front of the busbar adapter, the busbar system or the part if they are mounted as intended.

The rear side is a side of a part which is oriented or faced to the background or away from a human standing in front of that part or portion.

Throughout this document, an electrical installation device is understood to be a device which is intended to be mounted on and connected with the busbar system. They may be designed for being directly attached to the busbars with their backside, which is denoted here as the mounting portion. Busbar adapters are devices which are designed for being attached to the busbars, again via their mounting portion on the backside, and to receive, on their frontside, electrical installation devices which do not directly fit with the busbar system.

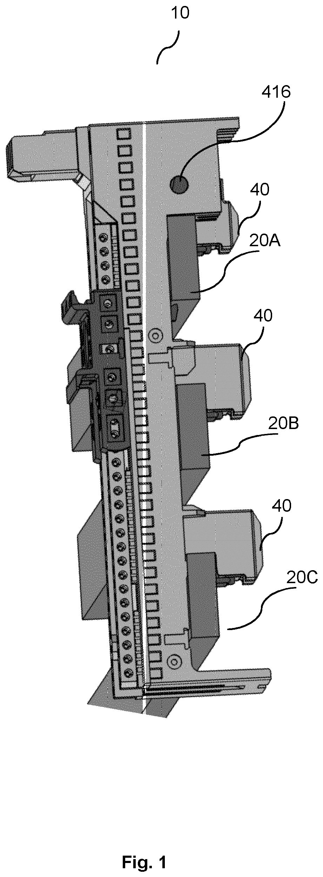

Fig. 1 illustrates a typical busbar adapter with a mounting portion 10. The adapter is hooked with its mounting portion 10 onto at least one busbar 20A, 20B, 20C by means of hooking means 40. The hooking means 40 grasp over and behind the top edges of each busbar 20A, 20B, 20C. The mounting portion 10 is provided with a conventional securing mechanism 400 which is intended to protect the mounting portion from being accidentally removed from the busbars 20A, 20B, 20C.

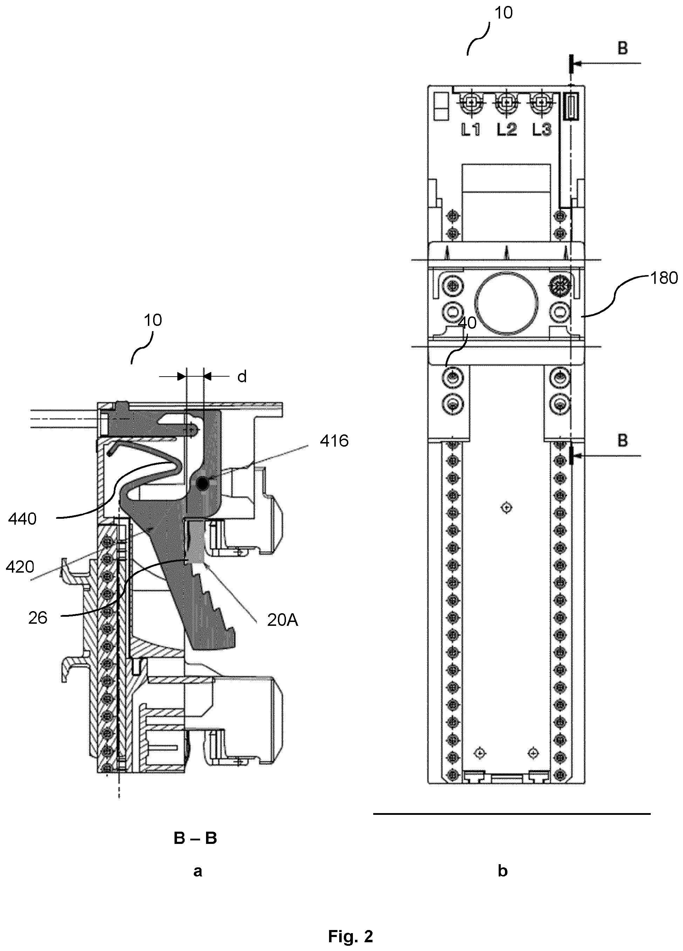

The conventional securing mechanism 400 is described in more detail in connection with Fig. 2a which illustrates a cut of the adapter along the line B - B as marked in Fig. 2b. The securing mechanism 400 comprises a latching arm 420 which is pressed onto the lower edge of the busbar 20 by a spring 440. The latching arm 420 is articulated at a pivot point 416 on the mounting portion 10. This pivot point 416 is located in a distance d behind the top edge of the busbar 20A. The securing mechanism 400 produces an additional, self-reinforcing clamping force onto the adapter when the adapter is tried to be lifted up.

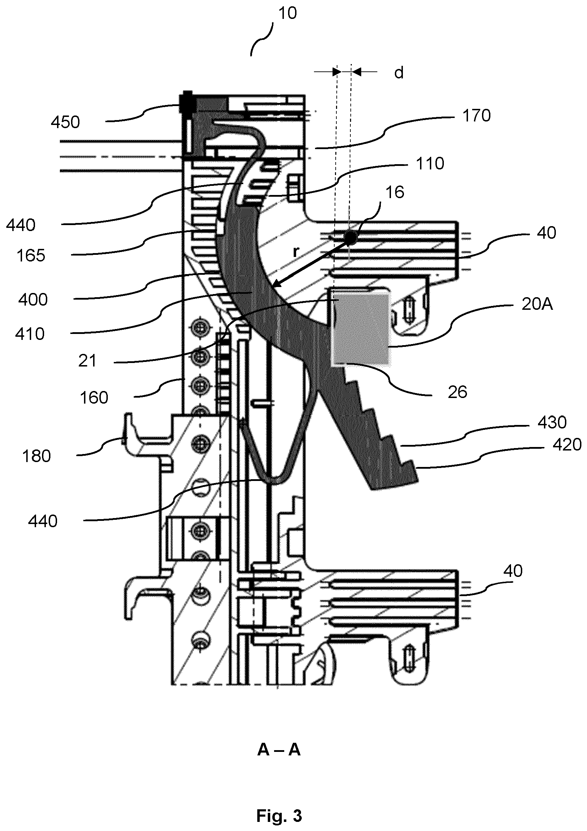

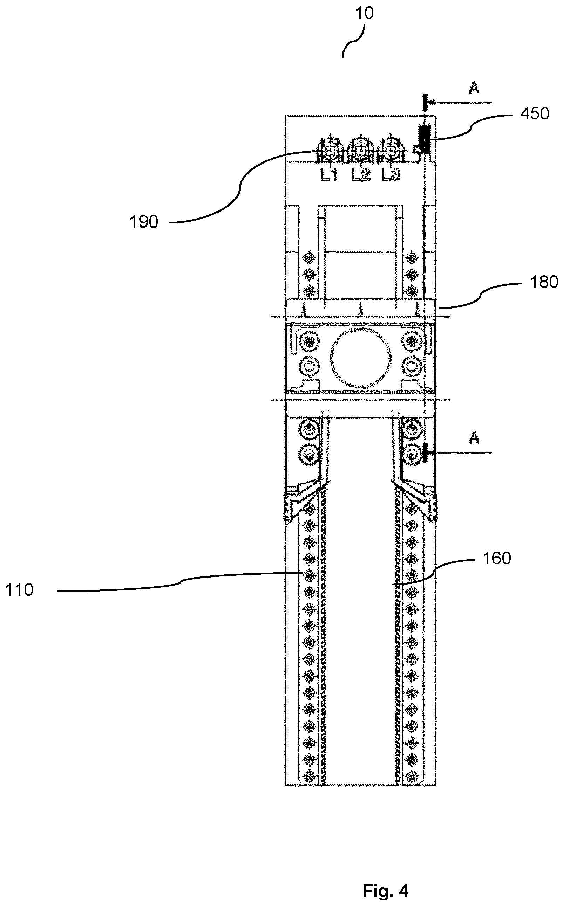

Fig. 3 and Fig. 4 illustrate an adapter with the mounting portion 10 according to an embodiment of the invention. Fig. 3 is a section view along the cut line A - A of Fig. 4, which latter illustrates a front view of the adapter. The adapter can receive an electrical installation device (not illustrated) on a profile rail (e.g., a DIN rail) 180 arranged on two vertical rails 140 running in the vertical direction on its front side 160. The adapter may conduct currents of the three phases L1, L2, L3 from the busbars 20A, 20B, 20C via connector lines 190 to the installation device.

The mounting portion 10 comprises hooking means 40 that are arranged on the mounting portion 10, and are adapted for being hooked onto the at least one busbar 20A, 20B, 20C in the same way as described above in connection with Fig. 1 and 2.

The mounting portion 10 of the invention has a securing mechanism 400 for preventing the mounting portion 10 from being accidentally detached from the at least one busbar 20A, 20B, 20C.

The securing mechanism 400 comprises a latching arm 420 which is arranged on the rear side 170 of the mounting portion 10. The latching arm 420 is adapted to grasp an attachment point 26, which is fixed with respect to the at least one busbar 20A, 20B, 20C. The latching arm 420 is permanently pressed against the attachment point 26 in an upward direction, when the mounting portion 10 is attached to the at least one busbar 20A, 20B, 20C.

In this embodiment, the attachment point 26 is located below the top edge 21 the uppermost busbar 20A. That is, the latching arm 420 is designed to grasp the lower front edge of the uppermost busbar 20A of the at least one busbar 20A, 20B, 20C.

The latching arm 420 further comprises an arm portion 410 which defines a concave arc with a predefined radius r. The portion 410 defining the concave arc is adapted to sit slidingly on a section 110 of the mounting portion 10 which defines a convex arc. The section 110 defining the convex arc has the same predefined radius r.

The center point 16 of the of both arcs is located behind the uppermost edge 21 of the busbar 20A when the mounting portion 10 is attached to the at least one busbar 20A, 20B, 20C. That is, the center point 16 is shifted by a predetermined distance d behind the uppermost edge 21.

In this embodiment, the center point 16 is located above the uppermost busbar 20A.

The mounting portion 10 may further comprise a segment 165 which is adapted to support the arm portion 410. The segment 165 defines the same concave arc as the arm portion 410 such that the latter fits with it. The segment 165 may be formed by ribs whose ends define a concave arched envelope.

When an upward force is applied to the mounting portion 10, the force leads, or tends to lead, to a movement of the arm portion 410 defining the concave arc over the section 110 defining the convex arc. This movement is a rotation about the virtual center point 16 of the arm portion 410 defining the concave arc. Since the center point 16 of the convex arc (and thus of the concave arc too) is behind the upper edge 21 of the busbar 20A, the mounting portion 10 is pressed yet stronger onto the at least one busbar 20A, 20B, 20C rather than being lifted up.

Unlike in the state of the art, the securing mechanism 400 of the invention is not pivoted or hinged at the physical center point 416 of the rotation. Nevertheless, the securing mechanism 400 acts like a securing mechanism which is articulated at a center point behind the point of attachment of the securing mechanism.

The latching arm 420 has a sawtooth profile 430 which is adapted to grasp, with one of the teeth, the lower edge of the busbar 20. By the provision of several teeth, the latching arm 420 can grasp behind busbars of different dimensions, thicknesses, or distances.

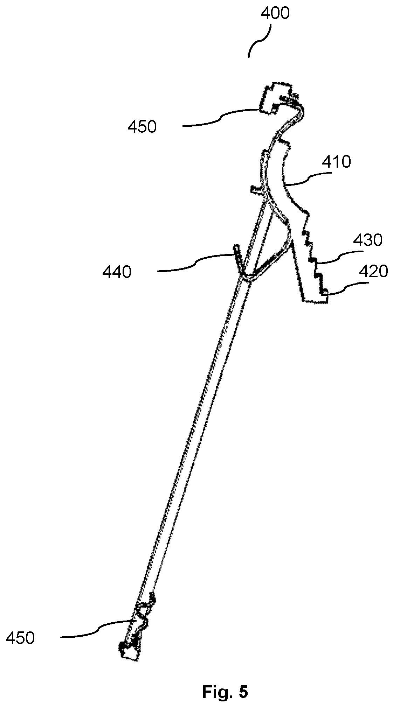

As can be seen in Fig. 3 and Fig. 5, the securing mechanism 400 further comprises a spring means 440 for effecting a clamping force which acts on the latching arm 420 to permanently press the latching arm 420 against the busbar 20 when the mounting portion is attached to the busbar 20.

The securing mechanism 400 comprises a releasing mechanism 450. In this embodiment, the releasing mechanism 450 is adapted to be operated against the spring means 440 to release the locking arm 420 from the busbar edge 20.

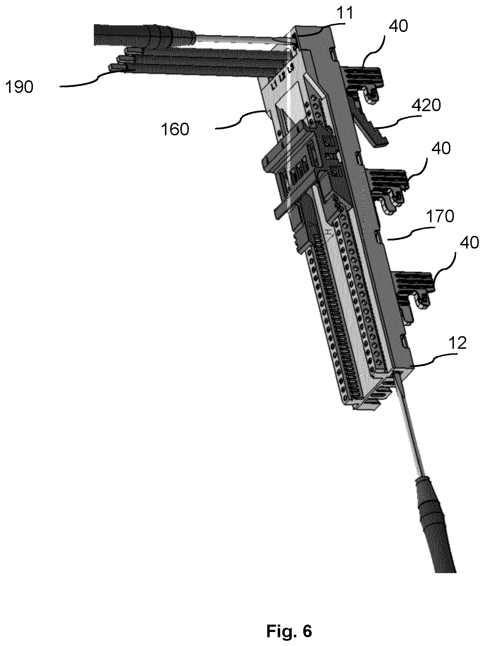

The releasing mechanism can be operated by tool like a screwdriver, either from the upper surface 11 of the front side of the mounting portion 10 or from the bottom (lower surface 12) of the mounting portion 10, as illustrated in Fig. 6. In either case, the tool is introduced into an opening and operates against the spring means 450. Upon releasing the locking arm 420, the mounting portion 10 or adapter can be lifted and taken away from the busbars 20.

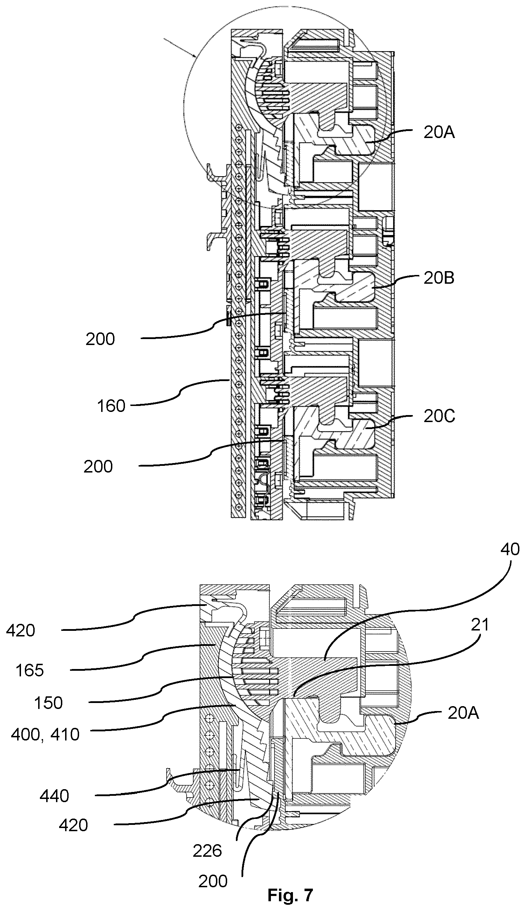

Fig. 7 illustrates a further embodiment of the invention. In this embodiment, the mounting portion 10 is adapted to be attached to a busbar system 20 which is covered by a touch protection cover 200. The touch protection cover 200 is mounted in front of the at least one busbar 20A, 20B, 20C.

Similar to the embodiment described above, the mounting portion 10 is adapted for being hooked onto at least one busbar 20. Hereto, the corresponding hooking means 40 have to be long enough for grasping the at least one busbar 20A, 20B, 20C through the touch protection cover 200. The protection cover 200 has holes through which the hooking means 40 extend when attached to the at least one busbar 20A, 20B, 20C.

The latching arm 420 is adapted to grasp an attachment point 226 which is located at the touch protection cover 200.

Also in this embodiment, the latching arm 420 may be adapted to grasp an attachment point 26 located on the busbar 20A, 20B, 20C rather than the protection cover 200. Then, the latching arm 420 extends through holes provided in the protection cover 200 provided for that purpose.

The segment 165 is the same as in the embodiment described above.

In all embodiments of the invention, the section 110 defining the convex arc may be implemented in different ways. One way is that the surface of the section 110 has a continuously convex shape.

Another way is that the section 110 is formed by a number of ribs 150 which are spaced to each other and define the convex arc by the envelope of their ends. The, the surface of the concave arc should be continuous.

Vice versa, the arm portion 410 of the securing arm 420 which defines the concave arc may be continuously shaped, or has ribs whose envelope define the concave arc. Then, the surface of the section 110 should have a continuously convex shape.

As mentioned above, in all embodiments of the invention, the center points 16 of both convex and concave arcs have to be located behind the at least one busbar 20A, 20B, 20C, or the uppermost busbar 20A when the mounting portion 10 is attached to the at least one busbar 20A, 20B, 20C.

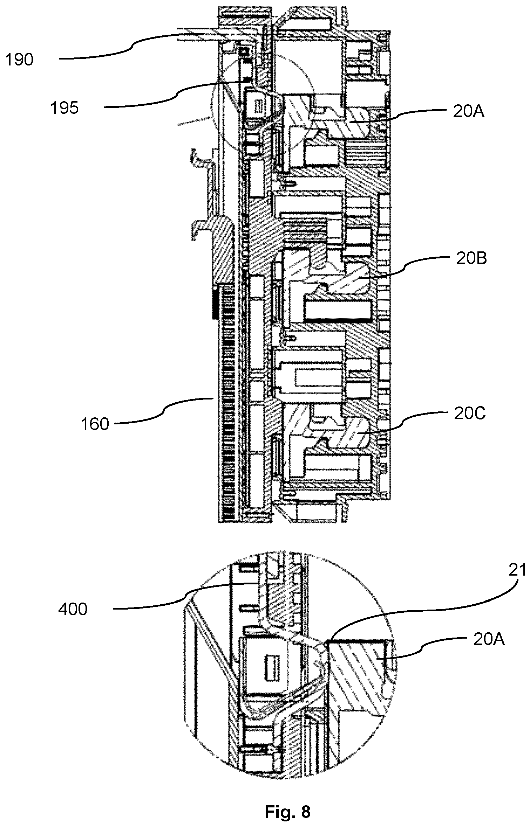

The mounting portion 10 may comprise current conductors 195 which are oriented in a longitudinal direction of the mounting portion 10, and are pressed against the busbars 20A, 20B, 20C, as illustrated in Fig. 8 for one busbar 20A corresponding to one phase 190. The current conductors 195 connect the busbars 20 to elements located in the mounting portion 10, or in the installation device comprising the mounting portion 10.

If the mounting portion 10 is part of an adapter, the current conductors 195 may be connected to connector lines 190, e.g., one per phase L1, L2, L3, which provide the current of the phases to an electrical installation device mounted on the profile rail 180 of the adapter.

The electrical installation device or electrical component can include at least one of the following: Engine control unit, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller units.

### List of reference numerals

- 10: mounting portion
- 16: center point
- 20A, 20B, 20C: busbar
- 21: top edge
- 26: attachment point
- 40: hook
- 140: section defining convex arc
- 150: rib
- 160: front side
- 165: segment
- 170: rear side, rear surface
- 180: profile rail
- 190: connector line
- 195: current conductor
- 200: touch protection cover, support element
- 226: attachment point
- 400: securing mechanism
- 410: arm portion
- 416: pivot point
- 420: latching arm
- 430: sawtooth profile
- 440: spring means
- 450: releasing mechanism
- L1, L2, L3: phase
- d: distance
- r: arc radius

## Claims

1. Mounting portion (10) of an electrical installation device, the mounting portion being attachable to at least one current busbar (20A, 20B, 20C),
the mounting portion comprising:
a hooking mechanism (40) that is arranged on the mounting portion (10), and is adapted for being hooked onto the at least one busbar (20A, 20B, 20C),
a securing mechanism (400), comprising:
a latching arm (420), the latching arm (420) being arranged on the mounting portion (10), the latching arm (420) being adapted to grasp an attachment point (26, 226) which attachment point (26, 226) is fixed with respect to the at least one busbar (20A, 20B, 20C),
the latching arm (420) being further adapted to be in engagement with the attachment point (26, 226), when the mounting portion (10) is attached to the at least one busbar (20A, 20B, 20C),
**characterized in that**
the latching arm (420) comprising an arm portion (410) which defines a concave arc with a predefined radius (r), the arm portion (410) being adapted to sit slidingly on a section (110) of the mounting portion (10) which defines a convex arc, the convex arc having the predefined radius (r), and the center point (16) of both arcs being located behind the attachment point (26, 226) when the mounting portion (10) is attached to the at least one busbar (20A, 20B, 20C).

2. The mounting portion (10) according to claim 1, wherein the center point (16) is located above the uppermost busbar (20A of the at least one busbar (20A, 20B, 20C), when the mounting portion (10) is attached to the at least one busbar (20A, 20B, 20C).

3. The mounting portion (10) according to one of the preceding claims, wherein the latching arm (420) is adapted to be permanently pressed to the attachment point (26, 226) in an upward direction.

4. The mounting portion (10) according to one of the preceding claims, wherein the attachment point (26, 226) is located below a top edge (21) of the uppermost busbar (20) of the least one busbar (20A, 20B, 20C), when the mounting portion (10) is attached to the at least one busbar (20).

5. The mounting portion (10) according to one of the preceding claims, wherein the latching arm (420) has a sawtooth profile (430) which is adapted to grasp the attachment point (26, 226).

6. The mounting portion (10) according to one of the preceding claims, wherein the attachment point (26, 226) is a lower front edge (26) of one of the at least one busbar (20A, 20B, 20C), in particular of the uppermost busbar (20A), when the mounting portion (10) is attached to the at least one busbar (20A, 20B, 20C).

7. The mounting portion (10) according to one of the preceding claims, wherein the attachment point (26, 226) is located at a touch protection cover (200) which is adapted to be mounted in front of the at least one busbar (20A, 20B, 20C).

8. The mounting portion (10) according to one of the preceding claims, wherein the securing mechanism (400) further comprises a spring means (440) for effecting a clamping force, the clamping force being adapted for acting on the latching arm (420) to permanently press the latching arm (420) against the attachment point (26, 226) when the mounting portion (10) is attached to the at least one busbar (20A, 20B, 20C ).

9. The mounting portion (10) according to one of the preceding claims, wherein the section (110) is formed by a rib.

10. The mounting portion (10) according to one of claims 1 to 8, wherein the section (110) is formed by a number of ribs (150) being spaced apart from each other.

11. The mounting portion (10) according to one of the preceding claims, further comprising a segment (165) which is adapted to support the arm portion (410), when the mounting portion (10) is attached to the at least one busbar (20), the segment (165) defining the same concave arc as the arm portion (410).

12. The mounting portion (10) according to one of the preceding claims, wherein the securing mechanism (400) comprises a releasing mechanism (450), the releasing mechanism being adapted to be operated for releasing the locking arm (420) from the attachment point (26, 226).

13. An adapter comprising the mounting portion (10) according to one of the preceding claims, and being designed to receive an electrical installation device on the mounting portion (10), and to electrically connect the electrical installation device with a busbar system.

14. An installation device or an electrical component with a mounting portion (10) according to one of the preceding claims 1 to 12.

15. The electrical installation device or electrical component according to claim 14, wherein the electrical installation device or component being one of the following: Engine control unit, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller.

## Patentansprüche

1. Befestigungsabschnitt (10) einer elektrischen Installationsvorrichtung, wobei der Befestigungsabschnitt an mindestens einer Stromsammelschiene (20A, 20B, 20C) anbringbar ist, wobei der Befestigungsabschnitt umfasst:
einen Anhakmechanismus (40), der an dem Befestigungsabschnitt (10) angeordnet ist und ausgelegt ist, um an die mindestens eine Sammelschiene (20A, 20B, 20C) angehakt zu werden,
einen Sicherungsmechanismus (400), der umfasst:
einen Arretierungsarm (420), wobei der Arretierungsarm (420) an dem Befestigungsabschnitt (10) angeordnet ist, wobei der Arretierungsarm (420) ausgelegt ist, um einen Anbringungspunkt (26, 226) zu greifen, wobei der Anbringungspunkt (26, 226) bezüglich der mindestens einen Sammelschiene (20A, 20B, 20C) fixiert ist,
wobei der Arretierungsarm (420) ferner ausgelegt ist, um mit dem Anbringungspunkt (26, 226) in Eingriff zu stehen, wenn der Befestigungsabschnitt (10) an der mindestens einen Sammelschiene (20A, 20B, 20C) angebracht ist,
**dadurch gekennzeichnet, dass**
der Arretierungsarm (420) einen Armabschnitt (410) umfasst, der einen konkaven Bogen mit einem bestimmten Radius (r) definiert, wobei der Armabschnitt (410) ausgelegt ist, um gleitend auf einer Sektion (110) des Befestigungsabschnitts (10) zu sitzen, der einen konvexen Bogen definiert, wobei der konvexe Bogen den bestimmten Radius (r) aufweist und der Mittelpunkt (16) beider Bögen sich hinter dem Anbringungspunkt (26, 226) befindet, wenn der Befestigungsabschnitt (10) an der mindestens einen Sammelschiene (20A, 20B, 20C) angebracht ist.

2. Befestigungsabschnitt (10) nach Anspruch 1, wobei sich der Mittelpunkt (16) oberhalb der obersten Sammelschiene (20A) der mindestens einen Sammelschiene (20A, 20B, 20C) befindet, wenn der Befestigungsabschnitt (10) an der mindestens einen Sammelschiene (20A, 20B, 20C) angebracht ist.

3. Befestigungsabschnitt (10) nach einem der vorstehenden Ansprüche, wobei der Arretierungsarm (420) ausgelegt ist, um dauerhaft in einer Aufwärtsrichtung an den Anbringungspunkt (26, 226) gedrückt zu sein.

4. Befestigungsabschnitt (10) nach einem der vorstehenden Ansprüche, wobei sich der Anbringungspunkt (26, 226) unterhalb einer oberen Kante (21) der obersten Sammelschiene (20) der mindestens einen Sammelschiene (20A, 20B, 20C) befindet, wenn der Befestigungsabschnitt (10) an der mindestens einen Sammelschiene (20) angebracht ist.

5. Befestigungsabschnitt (10) nach einem der vorstehenden Ansprüche, wobei der Arretierungsarm (420) ein Sägezahnprofil (430) aufweist, das ausgelegt ist, um den Anbringungspunkt (26, 226) zu greifen.

6. Befestigungsabschnitt (10) nach einem der vorstehenden Ansprüche, wobei der Anbringungspunkt (26, 226) eine untere Vorderkante (26) einer der mindestens einen Sammelschiene (20A, 20B, 20C), insbesondere der obersten Sammelschiene (20A), ist, wenn der Befestigungsabschnitt (10) an der mindestens einen Sammelschiene (20A, 20B, 20C) angebracht ist.

7. Befestigungsabschnitt (10) nach einem der vorstehenden Ansprüche, wobei der Anbringungspunkt (26, 226) an einer Berührungsschutzabdeckung (200) angeordnet ist, die ausgelegt ist, um vor der mindestens einen Sammelschiene (20A, 20B, 20C) befestigt zu sein.

8. Befestigungsabschnitt (10) nach einem der vorstehenden Ansprüche, wobei der Sicherungsmechanismus (400) ferner ein Federmittel (440) zum Bewirken einer Klemmkraft umfasst, wobei die Klemmkraft ausgelegt ist, um auf den Arretierungsarm (420) zu wirken, um den Arretierungsarm (420) dauerhaft gegen den Anbringungspunkt (26, 226) zu drücken, wenn der Befestigungsabschnitt (10) an der mindestens einen Sammelschiene (20A, 20B, 20C) angebracht ist.

9. Befestigungsabschnitt (10) nach einem der vorstehenden Ansprüche, wobei die Sektion (110) durch eine Rippe gebildet ist.

10. Befestigungsabschnitt (10) nach einem der Ansprüche 1 bis 8, wobei die Sektion (110) durch eine Anzahl von Rippen (150) gebildet ist, die voneinander beabstandet angeordnet sind.

11. Befestigungsabschnitt (10) nach einem der vorstehenden Ansprüche, der ferner ein Segment (165) umfasst, das ausgelegt ist, um den Armabschnitt (410) zu stützen, wenn der Befestigungsabschnitt (10) an der mindestens einen Sammelschiene (20) angebracht ist, wobei das Segment (165) denselben konkaven Bogen wie der Armabschnitt (410) definiert.

12. Befestigungsabschnitt (10) nach einem der vorstehenden Ansprüche, wobei der Sicherungsmechanismus (400) einen Freigabemechanismus (450) umfasst, wobei der Freigabemechanismus ausgelegt ist, um betätigt zu werden, um den Arretierungsarm (420) von dem Anbringungspunkt (26, 226) zu freizugeben.

13. Adapter, der den Befestigungsabschnitt (10) nach einem der vorstehenden Ansprüche umfasst und ausgelegt ist, um eine elektrische Installationsvorrichtung an dem Befestigungsabschnitt (10) aufzunehmen und die elektrische Installationsvorrichtung mit einem Sammelschienensystem elektrisch zu verbinden.

14. Installationsvorrichtung oder elektrische Komponente mit einem Befestigungsabschnitt (10) nach einem der vorstehenden Ansprüche 1 bis 12.

15. Elektrische Installationsvorrichtung oder elektrische Komponente nach Anspruch 14, wobei die elektrische Installationsvorrichtung oder Komponente eines der Folgenden ist: Motorsteuereinheit, Stromversorgungseinheit, Adapter für elektrische Vorrichtungen, Messvorrichtung, Anzeigevorrichtung, Wandlereinheit, Sicherungshalter, Lasttrennschalter, Lasttrennschalter mit Sicherungen, Sicherungslasttrennschalter, Überspannungsschutzvorrichtung, Blitzschutzvorrichtung, Kommunikationsvorrichtung, Fehlerstromschutzschalter, Entstörvorrichtung, Steuereinheit.

## Revendications

1. Partie de montage (10) d'un dispositif d'installation électrique, la partie de montage pouvant être attachée à au moins une barre omnibus (20A, 20B, 20C) de courant, la partie de montage comprenant :
un mécanisme d'accrochage (40) qui est agencé sur la partie de montage (10), et est conçu pour être accroché sur l'au moins une barre omnibus (20A, 20B, 20C),
un mécanisme de fixation (400), comprenant :
un bras de verrouillage (420), le bras de verrouillage (420) étant agencé sur la partie de montage (10), le bras de verrouillage (420) étant conçu pour saisir un point d'attachement (26, 226) ce point d'attachement (26, 226) étant fixe par rapport à l'au moins une barre omnibus (20A, 20B, 20C),
le bras de verrouillage (420) étant conçu en outre pour être en prise avec le point d'attachement (26, 226), lorsque la partie de montage (10) est attachée à l'au moins une barre omnibus (20A, 20B, 20C),
**caractérisé en ce que**
le bras de verrouillage (420) comprend une partie de bras (410) qui définit un arc concave avec un rayon prédéfini (r), la partie de bras (410) étant conçue pour reposer de manière coulissante sur une section (110) de la partie de montage (10) qui définit un arc convexe, l'arc convexe ayant le rayon prédéfini (r), et le point central (16) de l'un et l'autre des arcs étant localisé derrière le point d'attachement (26, 226) lorsque la partie de montage (10) est attachée à l'au moins une barre omnibus (20A, 20B, 20C).

2. Partie de montage (10) selon la revendication 1, dans laquelle le point central (16) est localisé au-dessus de la barre omnibus tout en haut (20A parmi l'au moins une barre omnibus (20A, 20B, 20C), lorsque la partie de montage (10) est attachée à l'au moins une barre omnibus (20A, 20B, 20C).

3. Partie de montage (10) selon l'une des revendications précédentes, dans laquelle le bras de verrouillage (420) est conçu pour être pressé de façon permanente au point d'attachement (26, 226) dans une direction vers le haut.

4. Partie de montage (10) selon l'une des revendications précédentes, dans laquelle le point d'attachement (26, 226) est localisé en dessous d'un bord supérieur (21) de la barre omnibus tout en haut (20) parmi l'au moins une barre omnibus (20A, 20B, 20C), lorsque la partie de montage (10) est attachée à l'au moins une barre omnibus (20).

5. Partie de montage (10) selon l'une des revendications précédentes, dans laquelle le bras de verrouillage (420) a un profil en dent-de-scie (430) qui est conçu pour saisir le point d'attachement (26, 226).

6. Partie de montage (10) selon l'une des revendications précédentes, dans laquelle le point d'attachement (26, 226) est un bord avant inférieur (26) de l'une parmi l'au moins une barre omnibus (20A, 20B, 20C), en particulier de la barre omnibus tout en haut (20A), lorsque la partie de montage (10) est attachée à l'au moins une barre omnibus (20A, 20B, 20C).

7. Partie de montage (10) selon l'une des revendications précédentes, dans laquelle le point d'attachement (26, 226) est localisé au niveau d'un couvercle de protection tactile (200) qui est conçu pour être monté devant l'au moins une barre omnibus (20A, 20B, 20C).

8. Partie de montage (10) selon l'une des revendications précédentes, dans laquelle le mécanisme de fixation (400) comprend en outre un moyen de ressort (440) permettant de réaliser une force de serrage, la force de serrage étant conçue pour agir sur le bras de verrouillage (420) pour presser de façon permanente le bras de verrouillage (420) contre le point d'attachement (26, 226) lorsque la partie de montage (10) est attachée à l'au moins une barre omnibus (20A, 20B, 20C).

9. Partie de montage (10) selon l'une des revendications précédentes, dans laquelle la section (110) est formée par une nervure.

10. Partie de montage (10) selon l'une des revendications 1 à 8, dans laquelle la section (110) est formée par un nombre de nervures (150) étant espacées les unes des autres.

11. Partie de montage (10) selon l'une des revendications précédentes, comprenant en outre un segment (165) qui est conçu pour supporter la partie de bras (410), lorsque la partie de montage (10) est attachée à l'au moins une barre omnibus (20), le segment (165) définissant le même arc concave que la partie de bras (410).

12. Partie de montage (10) selon l'une des revendications précédentes, dans laquelle le mécanisme de fixation (400) comprend un mécanisme de libération (450), le mécanisme de libération étant conçu pour être mis en fonctionnement pour libérer le bras de verrouillage (420) du point d'attachement (26, 226).

13. Adaptateur comprenant la partie de montage (10) selon l'une des revendications précédentes, et étant destiné à recevoir un dispositif d'installation électrique sur la partie de montage (10), et à connecter électriquement le dispositif d'installation électrique avec un système de barre omnibus.

14. Dispositif d'installation ou composant électrique avec une partie de montage (10) selon l'une des revendications 1 à 12 précédentes.

15. Dispositif d'installation électrique ou composant électrique selon la revendication 14, dans lequel le dispositif d'installation électrique ou le composant est l'un des suivants : unité de commande de moteur, unité d'alimentation en puissance, adaptateur pour dispositifs électriques, dispositif de mesure, dispositif d'affichage, unité de convertisseur, porte-fusible, interrupteur-sectionneur, interrupteur-sectionneur avec fusible, interrupteur-sectionneur fusible, dispositif de protection contre les surtensions, dispositif de protection contre la foudre, dispositif de communication, disjoncteur différentiel, dispositif de suppression d'interférences, dispositif de commande.
